# EUROPEAN PATENT APPLICATION

(11) **EP 4 675 715 A1**
(43) Date of publication of application: **07.01.2026**
(21) Application number: 24763785.3
(22) Date of filing: 22.02.2024
(51) Int. Cl.: H01M 4/86, B01J 23/42, H01M 8/10

(54) **CATALYST COMPOSITION AND CATALYST LAYER OF SOLID POLYMER FUEL CELL**

(30) Priority: 28.02.2023 JP 2023029086
(71) Applicant: Nissan Chemical Corporation, Tokyo 103-6119 (JP)
(72) Inventor: KEMMIZAKI, Yuta, Funabashi-shi, Chiba 274-0052 (JP)
(74) Representative: Mewburn Ellis LLP
(86) International application number: PCT/JP2024/006537
(87) International publication number: WO 2024/181304

(57) **Abstract**

The catalyst composition of the present invention is a catalyst composition comprising a hydrocarbon ionomer, a catalyst, and a catalyst support, wherein the hydrocarbon ionomer comprises a polymer compound having a structure represented by the following general formula (I), wherein the mass ratio of the hydrocarbon ionomer to the carbon in the catalyst support is 0.10 to 1.20: 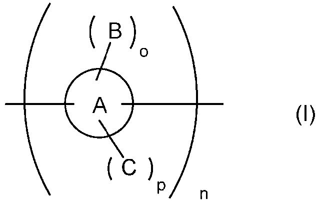 wherein, in general formula (I), n is 1 to 2, o is 1 to 3, and p is 0 to 3, wherein the relationship: o + p ≤ 4 is satisfied,
ring A is a benzene ring or a naphthalene ring, and
each of B and C is independently a group having at least one member selected from the group consisting of an alkyl group, an alkyl group having an ether linkage, a cycloalkyl group, and an aromatic group, which is bonded to ring A through a single heteroatom, or a heterocycle having a heteroatom therein bonded to ring A, and the ring and the group of B and C optionally have a substituent,
wherein B and C are the same or different, at least one of B and C has an aromatic ring, and at least one aromatic ring of B and C has at least one sulfonic acid group, and
wherein carbons of ring A, except the carbons bonded to the principal chain and the carbons to which B and C are bonded, are optionally substituted by a halogen. atom.

## Description

### Field of the Invention

The present invention relates to a catalyst composition used in a catalyst layer for a polymer electrolyte fuel cell.

### Background Art

A polymer electrolyte fuel cell (PEFC) has an anode catalyst layer, a cathode catalyst layer, and a solid electrolyte membrane disposed between the catalyst layers.

The electrolyte used in a solid electrolyte membrane is required to have proton conductive properties, gas barrier properties, electronic insulation properties, and durability. A fluorine ionomer has conventionally been used as an electrolyte that satisfies such properties.

With respect to the new electrolyte used in a solid electrolyte membrane and a catalyst layer, a hydrocarbon ionomer having an aromatic skeleton and having a sulfonic acid group introduced into the skeleton has been known (see, for example, patent documents 1 and 2).

With respect to the composition used in a solid electrolyte membrane, a composition comprising a fluorinated polymer having a sulfonic acid group and a fluorinated aromatic compound having a functional group capable of reacting with the sulfonic acid group of the fluorinated polymer has been known (see, for example, patent document 3).

When an ionomer is used in the catalyst layer, generally, in the catalyst composition, at least part of the ionomer covers the surface of a composite composed of the catalyst and the catalyst support having the catalyst supported thereon (see, for example, non-patent document 1).

### PRIOR ART REFERENCES

### Patent Documents

Patent document 1: U.S. Patent No. 7,301,002
Patent document 2: Japanese Unexamined Patent Publication No. 2015-95424
Patent document 3: Japanese Patent Application prior-to-examination Publication (kohyo) No. 2014-522437

### Non-patent Document

Non-patent document 1: J. Shimanuki et al. Microstructural observation of the swollen catalyst layers of fuel cells by cryo-TEM, Microscopy, 2023, 72(1), 60-63

### Summary of the Invention

### Problems to be Solved by the Invention

The catalyst support has properties such that it is likely to suffer aggregation in the catalyst composition, and a plurality of the composites are present in an aggregate form in the catalyst composition, and particles in which the ionomer covers the surface of the composites in an aggregate form are formed. For this reason, the catalyst composition has a problem in that the particles of the composite that the ionomer covers in the catalyst composition are such large that the dispersibility of the particles is reduced, leading to poor handling properties of the catalyst composition when applying the composition to a substrate.

Accordingly, an object of the present invention is to reduce the particle diameter of particles comprising the catalyst, the catalyst support, and the hydrocarbon ionomer in the catalyst composition, improving the dispersibility of the particles in the catalyst composition.

### Means for Solving the Problems

The present inventors have found that, by incorporating a specific polymer into the catalyst composition, the polymer suppresses aggregation of a composite composed of a catalyst and a catalyst support to cover the composite, and the present invention has been completed.

The present invention is, for example, the following [1] to [9].
[1] A catalyst composition comprising a hydrocarbon ionomer, a catalyst, and a catalyst support,
   the hydrocarbon ionomer comprising a polymer compound having a structure represented by the following general formula (I),
   wherein the mass ratio of the hydrocarbon ionomer to the carbon in the catalyst support is 0.10 to 1.20: 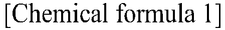 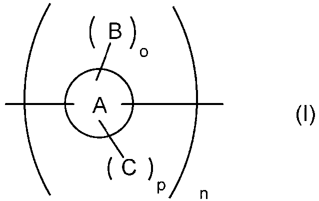
   wherein, in general formula (I), n is 1 to 2, o is 1 to 3, and p is 0 to 3,
   wherein the relationship: o + p ≤ 4 is satisfied,
   ring A is a benzene ring or a naphthalene ring, and
   each of B and C is independently a group having at least one member selected from the group consisting of an alkyl group, an alkyl group having an ether linkage, a cycloalkyl group, and an aromatic group,
   which is bonded to ring A through a single heteroatom, or a heterocycle having a heteroatom therein bonded to ring A, and the ring and the group of B and C optionally have a substituent,
   wherein B and C are the same or different, at least one of B and C has an aromatic ring, and at least one aromatic ring of B and C has at least one sulfonic acid group, and
   wherein carbons of ring A, except the carbons bonded to the principal chain and the carbons to which B and C are bonded, are optionally substituted by a halogen atom.
[2] The catalyst composition according to item [1] above, which contains particles comprising the hydrocarbon ionomer, the catalyst, and the catalyst support,
   wherein the particles have a median diameter of 0.1 to 10.0 µm in the volume-based particle size distribution measured by a laser diffraction scattering method.
[3] The catalyst composition according to item [1] or [2] above, wherein the polymer compound having a structure represented by the general formula (I) above is a compound represented by the general formula (II): 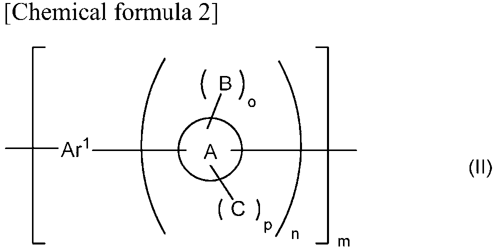 wherein, in general formula (II), Ar¹ is an aromatic group having 6 to 40 carbon atoms and optionally having a substituent, m is 3 or more, and ring A, B, C, n, o, and p are as defined for the general formula (I).
[4] The catalyst composition according to item [3] above, wherein, in the general formula (II), Ar¹ is a structure represented by the following general formula (III): 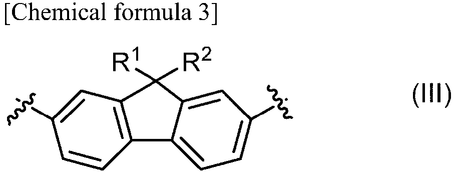 wherein, in general formula (III), each of R¹ and R² is independently an alkyl group, a cycloalkyl group, or an aromatic group, each optionally having a substituent, and R¹ and R² optionally together form a ring.
[5] The catalyst composition according to any one of items [1] to [4] above, wherein, in the general formula (I), each of the structures represented by B and C is independently a structure represented by the following general formula (IV) or (V), wherein the ring and the group contained in the general formula (IV) or (V) optionally have a substituent, and wherein at least one aromatic ring of the general formula (IV) or (V) has at least one sulfonic acid group: 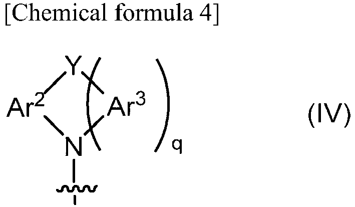
   wherein, in general formula (IV), each of Ar² and Ar³ is independently a benzene ring or a naphthalene ring, each optionally having a substituent,
   Y is a single bond, -CH₂-, or carbonyl, and q is 0 or 1, wherein when q is 0, one end of Y and one end of N are linked to each other, 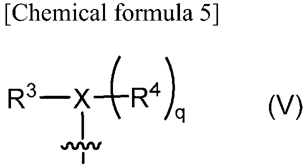
   wherein, in general formula (V), q is 0 or 1, X is a heteroatom, and each of R³ and R⁴ is independently an alkyl group, an alkyl group having an ether linkage, a cycloalkyl group, a phenyl group, or a naphthyl group,
   each optionally having a substituent, and R³ and R⁴ optionally together form a ring containing X.
[6] The catalyst composition according to any one of items [1] to [5] above, which is for use in a polymer electrolyte fuel cell.
[7] A catalyst layer for a polymer electrolyte fuel cell, comprising the catalyst composition according to any one of items [1] to [6] above.
[8] A membrane electrode assembly having a solid electrolyte membrane, a gas diffusion layer, and the catalyst layer according to item [7] above.
[9] A polymer electrolyte fuel cell having the membrane electrode assembly according to item [8] above.

### Effects of the Invention

The catalyst composition of the present invention is advantageous in that particles comprising the catalyst, the catalyst support, and the hydrocarbon ionomer have a small particle diameter such that the dispersibility of the particles in the catalyst composition is excellent.

### BRIEF DESCRIPTION OF THE DRAWING

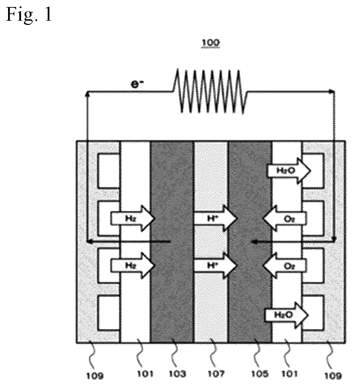

[Fig. 1] A cross-sectional view diagrammatically showing the construction of a polymer electrolyte fuel cell.

### MODE FOR CARRYING OUT THE INVENTION

In the present specification, the ionomer means a polymer material having a proton conductive function. The hydrocarbon ionomer means an ionomer having the principal chain comprised of a hydrocarbon, preferably means an ionomer having an aromatic ring in the principal chain thereof. The hydrocarbon ionomer is distinguished from a fluorine sulfonic acid polymer having the principal chain comprised of a fluorine substituted hydrocarbon, but may have a halogen as a substituent in the principal chain thereof. It is preferred that the hydrocarbon ionomer does not have a tetrafluoroethylene skeleton in the principal chain thereof.

The catalyst composition of the present invention is a catalyst composition comprising a hydrocarbon ionomer, a catalyst, and a catalyst support,
wherein the hydrocarbon ionomer comprises a polymer compound having a structure represented by the following general formula (I),
wherein the mass ratio of the hydrocarbon ionomer to the carbon in the catalyst support is 0.10 to 1.20: 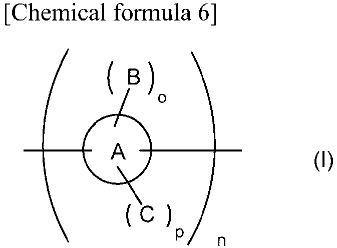
wherein, in general formula (I), n is 1 to 2, o is 1 to 3, and p is 0 to 3,
wherein the relationship: o + p ≤ 4 is satisfied,
ring A is a benzene ring or a naphthalene ring, and
each of B and C is independently a group having at least one member selected from the group consisting of an alkyl group, an alkyl group having an ether linkage, a cycloalkyl group, and an aromatic group,
which is bonded to ring A through a single heteroatom, or a heterocycle having a heteroatom therein bonded to ring A, and the ring and the group of B and C optionally have a substituent,
wherein B and C are the same or different, at least one of B and C has an aromatic ring, and at least one aromatic ring of B and C has at least one sulfonic acid group, and
wherein carbons of ring A, except the carbons bonded to the principal chain and the carbons to which B and C are bonded, are optionally substituted by a halogen atom.

### [Hydrocarbon ionomer]

The hydrocarbon ionomer comprises a polymer compound having a structure represented by the general formula (I) below. The hydrocarbon ionomer functions mainly as an electrolyte in the catalyst composition. 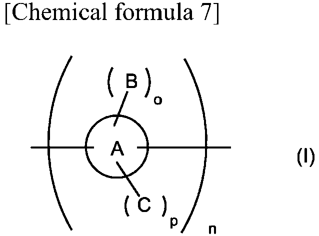
wherein, in general formula (I), n is 1 to 2, o is 1 to 3, and p is 0 to 3,
wherein the relationship: o + p ≤ 4 is satisfied,
ring A is a benzene ring or a naphthalene ring, and
each of B and C is independently a group having at least one member selected from the group consisting of an alkyl group, an alkyl group having an ether linkage, a cycloalkyl group, and an aromatic group,
which is bonded to ring A through a single heteroatom, or a heterocycle having a heteroatom therein bonded to ring A, and the ring and the group of B and C optionally have a substituent,
wherein B and C are the same or different, at least one of B and C has an aromatic ring, and at least one aromatic ring of B and C has at least one sulfonic acid group, and
wherein carbons of ring A, except the carbons bonded to the principal chain and the carbons to which B and C are bonded, are optionally substituted by a halogen atom.

The polymer compound having a structure represented by the general formula (I) preferably has a weight average molecular weight of 8,000 to 500,000, more preferably 20,000 to 200,000, further preferably 20,000 to 120,000, as measured by the gel permeation chromatography method described in the Examples.

In the general formula (I), n is 1 to 2, preferably 2.

In the general formula (I), o is 1 to 3, and p is 0 to 3. Further, the relationship: o + p ≤ 4 is satisfied, more preferably o + p = 4.

A polymer compound is a mixture of polymer compounds having a polymerization degree in the specific range, and therefore n, o, and p are an average of the polymer compounds having different polymerization degrees in such a mixture.

In the general formula (I), ring A is a benzene ring or a naphthalene ring, preferably a benzene ring.

When ring A is a benzene ring, the general formula (I) is represented by the following general formula (i): 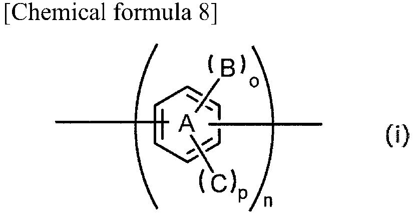 wherein, in general formula (i), carbons of ring A, B, C, n, o, and p are as defined for the general formula (I).

The weight average molecular weight of the polymer compound having a structure represented by the general formula (i) is similar to that of the polymer compound having a structure represented by the general formula (I).

In the general formulae (I) and (i), each of B and C is independently a group having at least one member selected from the group consisting of an alkyl group, an alkyl group having an ether linkage, a cycloalkyl group, and an aromatic group, which is bonded to ring A through a single heteroatom, preferably through an oxygen atom, a sulfur atom, or a nitrogen atom, more preferably through one member selected from the group consisting of -O-, -S-, and -N-, or a heterocycle having a heteroatom therein bonded to ring A. The wording "through a single heteroatom" means that the at least one member is bonded through a linker comprised of a single heteroatom, and does not include the case where the at least one member is bonded through a linker comprised of two or more heteroatoms, such as -SO₂-. It is preferred that the at least one member selected from the group consisting of an alkyl group, an alkyl group having an ether linkage, a cycloalkyl group, and an aromatic group is directly bonded to a heteroatom. The expression "directly" means that, for example, an aromatic group and a heteroatom do not have a hydrocarbon chain between them.

It is preferred that each of B and C is independently a group having at least one member selected from the group consisting of a linear or branched alkyl group having 1 to 16 carbon atoms, a linear or branched alkyl group having 1 to 16 carbon atoms and having an ether linkage, a cycloalkyl group having 1 to 16 carbon atoms, a phenyl group, and a naphthyl group, which is bonded to ring A through a single heteroatom, or a heterocycle having a heteroatom therein bonded to ring A and containing one member selected from the group consisting of a benzene ring, a naphthalene ring, and an ether linkage.

The ring and the group of B and C optionally have a substituent. B and C may be the same or different, and at least one of B and C has an aromatic ring, and at least one aromatic ring of B and C has at least one sulfonic acid group.

The heteroatom in B and C is preferably an oxygen atom, a sulfur atom, or a nitrogen atom, more preferably a sulfur atom or a nitrogen atom, further preferably a nitrogen atom.

A preferred mode of the heteroatom in B and C, i.e., the one member selected from the group consisting of -O-, -S-, and -N- is preferably -S- or -N-, more preferably - N-.

In the case where the ring or the group of B and C has a substituent, it is preferred that substituent is an alkyl group having 1 to 3 carbon atoms, a haloalkyl group having 1 to 3 carbon atoms, or an alkoxy group having 1 to 3 carbon atoms, and when there are two or more substituents each substituent is independent.

It is preferred that, in the general formulae (I) and (i), each of the structures represented by B and C is independently a structure represented by the following general formula (IV) or (V), wherein the ring and the group contained in the general formula (IV) or (V) optionally have a substituent, and wherein at least one aromatic ring of the general formula (IV) or (V) has at least one sulfonic acid group.

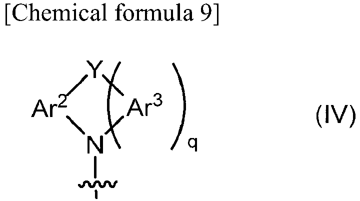

In the general formula (IV), each of Ar² and Ar³ is independently a benzene ring or a naphthalene ring, each optionally having a substituent, Y is a single bond, - CH₂, or carbonyl, and q is 0 or 1, wherein when q is 0, one end of Y and one end of N (nitrogen atom) are linked to each other.

It is preferred that substituent is an alkyl group having 1 to 3 carbon atoms, a haloalkyl group having 1 to 3 carbon atoms, or an alkoxy group having 1 to 3 carbon atoms, and when there are two or more substituents each substituent is independent.

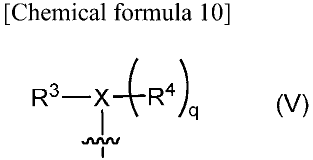

In the general formula (V), q is 0 or 1.

X is a heteroatom, and each of R³ and R⁴ is independently an alkyl group, an alkyl group having an ether linkage, a cycloalkyl group, a phenyl group, or a naphthyl group, each optionally having a substituent, preferably a linear or branched alkyl group having 1 to 16 carbon atoms, a linear or branched alkyl group having 1 to 16 carbon atoms and having an ether linkage, a cycloalkyl group having 1 to 16 carbon atoms, a phenyl group, or a naphthyl group.

R³ and R⁴ optionally together form a ring containing X.

It is preferred that substituent is an alkyl group having 1 to 3 carbon atoms, a haloalkyl group having 1 to 3 carbon atoms, or an alkoxy group having 1 to 3 carbon atoms, and when there are two or more substituents each substituent is independent.

In the general formula (IV) above, Y is preferably a single bond.

In the general formula (V) above, X is preferably a sulfur atom or a nitrogen atom.

As an example of the structure represented by the general formula (IV), there can be mentioned a structure represented by the following general formula (VI) or (VII) wherein the at least one aromatic ring has at least one sulfonic acid group.

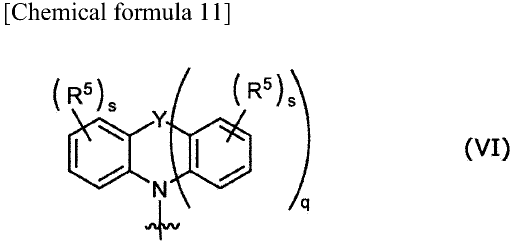

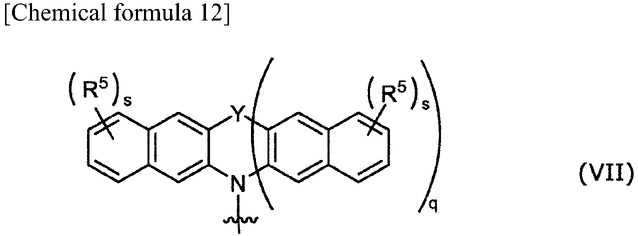

In the general formulae (VI) and (VII), Y is a single bond, -CH₂-, or carbonyl, and q is 0 or 1, wherein when q is 0, one end of Y and one end of N (nitrogen atom) are linked to each other, s is an integer of 1 to 6, and each R⁵ is independently an alkyl group having 1 to 3 carbon atoms, a haloalkyl group having 1 to 3 carbon atoms, or an alkoxy group having 1 to 3 carbon atoms. Y is preferably a single bond.

As examples of the structure represented by the general formula (V) wherein each of R³ and R⁴ is independently a phenyl group or a naphthyl group, each optionally having a substituent, there can be mentioned structures represented by the following general formulae (VIII) to (X) wherein the at least one aromatic ring has at least one sulfonic acid group. The general formula (VIII) is an example of the formula (V) wherein X is a sulfur atom and q = 0. The general formulae (IX) and (X) are an example of the formula (V) wherein X is a nitrogen atom and q = 1.

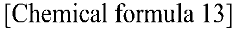

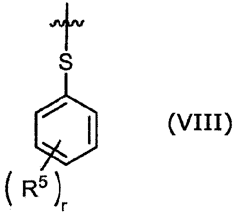

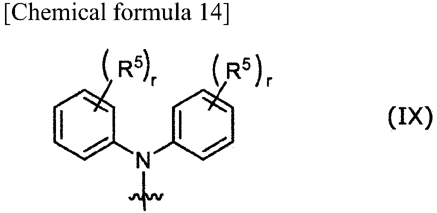

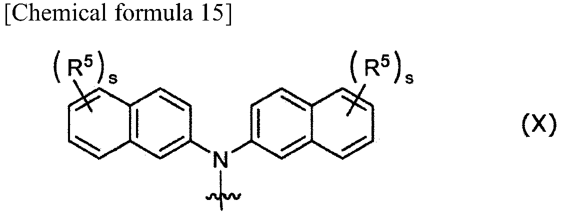

In the general formulae (VIII) to (X), r is an integer of 1 to 5, s is an integer of 1 to 6, and each R⁵ is independently an alkyl group having 1 to 3 carbon atoms, a haloalkyl group having 1 to 3 carbon atoms, or an alkoxy group having 1 to 3 carbon atoms.

As an example of the structure represented by the general formula (V) wherein R³ is a phenyl group or a naphthyl group, each optionally having a substituent, and R⁴ is an alkyl group, an alkyl group having an ether linkage, or a cycloalkyl group, each optionally having a substituent, there can be mentioned a structure represented by the following general formula (XI) wherein the aromatic ring has at least one sulfonic acid group.

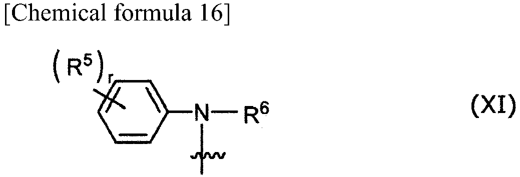

In the general formula (XI), r is an integer of 1 to 5, each R⁵ is independently an alkyl group having 1 to 3 carbon atoms, a haloalkyl group having 1 to 3 carbon atoms, or an alkoxy group having 1 to 3 carbon atoms, and R⁶ is a linear or branched alkyl group having 1 to 16 carbon atoms, a linear or branched alkyl group having 1 to 16 carbon atoms and having an ether linkage, or a cycloalkyl group having 1 to 16 carbon atoms, each optionally having a substituent R⁵.

As examples of the structure represented by the general formula (V) wherein each of R³ and R⁴ is independently an alkyl group, an alkyl group having an ether linkage, or a cycloalkyl group, each optionally having a substituent, and R³ and R⁴ optionally together form a ring containing X, there can be mentioned structures represented by the general formulae (XII) to (XIV) below. The general formula (XIV) below corresponds to the structure of the general formula (V) wherein R³ and R⁴ are an alkyl group having an ether linkage and together form a ring containing X.

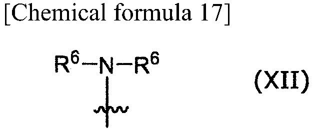

In the general formula (XII), each R⁶ is independently a linear or branched alkyl group having 1 to 16 carbon atoms, a linear or branched alkyl group having 1 to 16 carbon atoms and having an ether linkage, or a cycloalkyl group having 1 to 16 carbon atoms, each optionally having a substituent selected from the group consisting of an alkyl group having 1 to 3 carbon atoms, a haloalkyl group having 1 to 3 carbon atoms, and an alkoxy group having 1 to 3 carbon atoms.

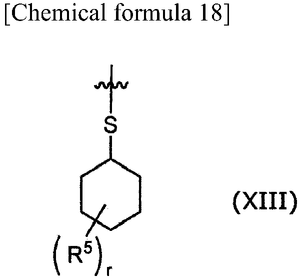

In the general formula (XIII), r is an integer of 1 to 5, and each R⁵ is independently an alkyl group having 1 to 3 carbon atoms, a haloalkyl group having 1 to 3 carbon atoms, or an alkoxy group having 1 to 3 carbon atoms.

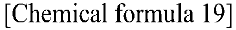

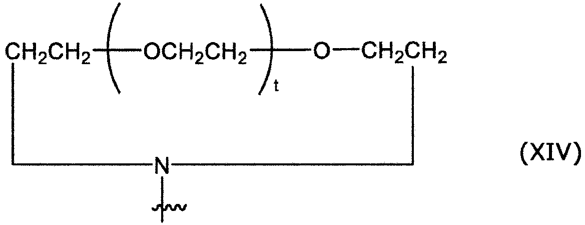

In the general formula (XIV), t is an integer of 1 to 6.

B and C may be the same, but are preferably different from each other.

When B and C are the same, it is preferred that B and C are the structure of the general formula (VI), (VIII), or (IX) wherein the at least one aromatic ring has at least one sulfonic acid group.

Further, even when B and C are different from each other, it is preferred that B and C are the same structure of any one of the general formulae (VI) to (XI) wherein only a substituent other than the sulfonic acid group is different, and wherein the at least one aromatic ring has at least one sulfonic acid group.

When B and C are different from each other, it is preferred that, in the general formulae (I) and (i), p is not 0, and B is the structure represented by the general formula (IV), or the structure represented by the general formula (V) wherein R³ is a phenyl group or a naphthyl group, each optionally having a substituent, R⁴ is an alkyl group, an alkyl group having an ether linkage, a cycloalkyl group, a phenyl group, or a naphthyl group, each optionally having a substituent, and R³ and R⁴ optionally together form a ring containing X, wherein at least one aromatic ring of the B has at least one sulfonic acid group, and C is the structure represented by the general formula (V) wherein each of R³ and R⁴ is independently an alkyl group, an alkyl group having an ether linkage, or a cycloalkyl group, each optionally having a substituent, and R³ and R⁴ optionally together form a ring containing X, and it is more preferred that B is a structure selected from the group consisting of the general formulae (VI) to (XI) above wherein the at least one aromatic ring has at least one sulfonic acid group, and C is selected from the group consisting of the general formulae (XII) to (XIV) above. By virtue of such a structure, the amount of the sulfonic acid group introduced into the polymer compound having a structure represented by the general formula (I) and (i) can be controlled.

The polymer compound having a structure represented by the general formula (I) is preferably a compound represented by the general formula (II).

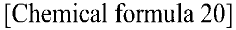

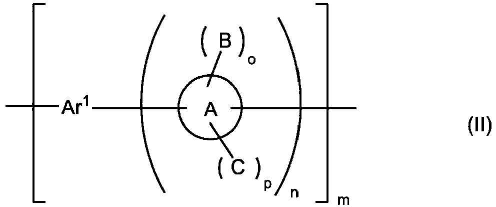

The compound represented by the general formula (II) is more preferably a compound represented by the following general formula (ii).

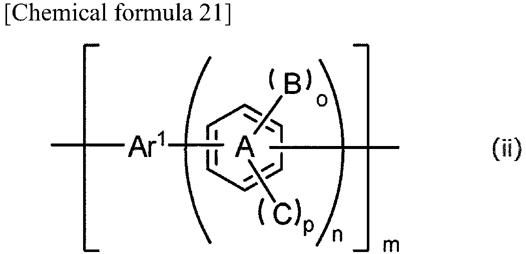

In the general formula (II), ring A, B, C, n, o, and p are as defined for the general formula (I). In the general formula (ii), carbons of ring A, B, C, n, o, and p are as defined for the general formula (I).

In the general formulae (II) and (ii), m is 3 or more, preferably 3 to 100, more preferably 15 to 60.

In the general formulae (II) and (ii), Ar¹ is an aromatic group having 6 to 40 carbon atoms and optionally having a substituent. The number of carbon atoms includes the number of carbon atoms of a substituent. Examples of aromatic groups include divalent groups corresponding to, for example, benzene, naphthalene, acetylene, biphenyl, indacene, biphenylene, acenaphthylene, acenaphthene, fluorene, phenalene, phenanthrene, tetralin, and anthracene. The substituents are those similar to R¹ and R² in the general formula (III) below, and when there are two or more substituents each substituent is independent.

Ar¹ is different from the structure represented by the general formula (I).

In the general formulae (II) and (ii), Ar¹ is preferably a structure represented by the following general formula (III).

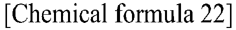

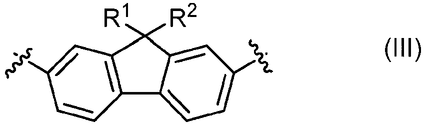

In the general formula (III), each of R¹ and R² is independently an alkyl group, a cycloalkyl group, or an aromatic group, each optionally having a substituent, preferably a linear or branched alkyl group having 1 to 15 carbon atoms, a cycloalkyl group having 4 to 12 carbon atoms, a phenyl group, or a naphthyl group, each optionally having a substituent, more preferably a linear or branched alkyl group having 5 to 11 carbon atoms, a cycloalkyl group having 4 to 6 carbon atoms, or a phenyl group, each optionally having a substituent, further preferably a linear or branched alkyl group having 5 to 9 carbon atoms and optionally having a substituent. R¹ and R² optionally together form a ring.

It is preferred that substituent is an alkyl group having 1 to 3 carbon atoms, a haloalkyl group having 1 to 3 carbon atoms and/or an alkoxy group having 1 to 3 carbon atoms, and when there are two or more substituents each substituent is independent.

The polymer compound having a structure represented by the general formula (I) or (i) preferably has an ion-exchange capacity (IEC ( mmol/g)) of 0.1 to 6, more preferably 1 to 5, further preferably 1.5 to 4. The number of sulfonic acid group or groups of the polymer compound having a structure represented by the general formula (I) is preferably a number such that the ion-exchange capacity is in the above range.

In the general formulae (I) and (i), carbons of ring A, except the carbons bonded to the principal chain and the carbons to which B and C are bonded, are optionally substituted by a halogen atom. The "principal chain" means the principal chain of the polymer compound having a structure represented by the general formula (I).

The halogen atom is preferably a fluorine atom.

The number of substitution of ring A with a halogen atom or atoms is preferably 0 to 5, more preferably 0 to 3, per ring A.

The polymer compound having a structure represented by the general formula (I) can be produced by the below-described method, for example, with reference to the non-patent document, Macromolecules 2013, 46, 370-374.

In the (Formula 1) and (Formula 2) below, ring A is as defined for the general formula (I), n, o, and p are as defined for the general formula (I), Ar¹ and m are as defined for the general formula (II), and B' and C' are as defined for B and C in the general formulae (I), except that B' and C' do not have a sulfonic acid group and have one less hydrogen atoms.

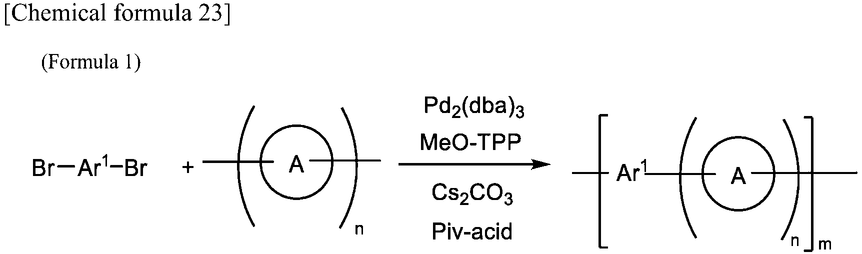

As shown in (Formula 1), a bromination product of Ar¹ and a compound forming ring A are first reacted with each other in a solvent, such as cyclopentyl methyl ether, in the presence of a metal catalyst, such as tris(dibenzylideneacetone)dipalladium(0), tris(o-methoxyphenyl)phosphine, cesium carbonate, and pivalic acid.

The reaction temperature is generally 100 to 110°C. With respect to the solvent used in the present reaction, any solvent can be used as long as the solvent can dissolve the raw materials therein, and, as a solvent other than cyclopentyl methyl ether, for example, dimethylacetamide or toluene can be used. With respect to the metal catalyst, as a metal catalyst other than tris(dibenzylideneacetone)dipalladium(0), palladium(II) acetate, tris(dibenzylideneacetone)dipalladium(0) (chloroform addition product), chloro[(tri-tert-butylphosphine)-2-(2-aminobiphenyl)]palladium(II), or trans-di(µ-acetato)bis[o-di-o-tolylphosphinobenzyldipalladium(II) can be used.

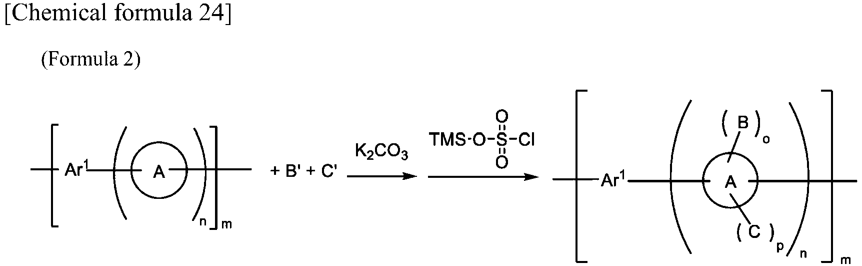

Then, for example, with reference to the non-patent document, Macromolecules 2021, 54, 725-735, as shown in (Formula 2), the compound obtained in (Formula 1), B', and C' are reacted in an N,N-dimethylformamide solvent in the presence of a base, such as potassium carbonate, to introduce B' and C' into ring A of the compound obtained in (Formula 1). The ratio of the B' and C' introduced can be controlled by appropriately selecting the amounts of the B' and C' added. The reaction temperature is generally 110 to 130°C. With respect to the base, as a base other than potassium carbonate, sodium hydride, potassium tert-butoxide, or diazabicycloundecene can be used.

Finally, the thus obtained compound is reacted with a sulfonating agent in a dichloromethane solvent to introduce at least one sulfonic acid group into at least one aromatic ring of B' and C', forming B and C. A sulfonic acid group is selectively introduced into any position of the aromatic ring of B' and C' having smaller steric hindrance than Ar¹ (unit having the above-shown fluorene skeleton) constituting the principal chain. The reaction temperature is generally 25 to 35°C. Examples of sulfonating agents include trimethylsilyl chlorosulfonate, sulfonyl chloride, fuming sulfuric acid, and sulfuric acid.

### [Catalyst]

With respect to the catalyst, there is no particular limitation and a known metal catalyst and a known nonmetal catalyst can be used. Examples of metal catalysts include metals, such as platinum, gold, silver, ruthenium, iridium, rhodium, palladium, osmium, tungsten, lead, iron, chromium, cobalt, nickel, manganese, vanadium, molybdenum, gallium, and aluminum, alloys thereof, and core/shell structures thereof. Examples of nonmetal catalysts include a carbon alloy catalyst. From the viewpoint of the catalytic activity, the catalyst preferably has a particle diameter of 0.5 to 20 nm, further preferably 1 to 5 nm, as measured by a laser diffraction scattering method.

The carbon alloy catalyst is a carbon material obtained by heating a raw material containing an organic material and a metal to cause carbonization, and is known to exhibit catalytic activity. With respect to the organic material, there is no particular limitation as long as the material can undergo carbonization, but examples include thermosetting resins, such as a melamine resin, an epoxy resin, and a phenolic resin. With respect to the metal, there is no particular limitation, and a known metal can be used, but, for example, there can be mentioned iron, cobalt, and titanium.

### [Catalyst support]

Examples of catalyst supports include carbon black, such as channel black, furnace black, and thermal black, and carbon materials, such as carbon nanotubes, activated carbon obtained by subjecting various materials containing a carbon atom to carbonization for activation treatment, coke, natural graphite, artificial graphite, and graphitized carbon, and preferred is carbon black because it has high specific surface area and excellent electronic conductive properties. From the viewpoint of the dispersibility and specific surface area, the primary particles of the catalyst support preferably have a particle diameter of 10 to 1,000 nm, more preferably 10 to 100 nm, as measured by a laser diffraction scattering method.

In the catalyst composition, I/C, i.e., the mass ratio of the hydrocarbon ionomer to the carbon in the catalyst support is 0.10 to 1.20, more preferably 0.30 to 1.00, further preferably more than 0.5 to 1.00 or less, especially preferably more than 0.7 to 1.00 or less. When the I/C is in the above range, the particle diameter of the below-described particles comprising the hydrocarbon ionomer, catalyst, and catalyst support can be reduced, and further the amount of the hydrocarbon ionomer used in the catalyst composition can be suppressed.

### [Particles comprising the hydrocarbon ionomer, the catalyst, and the catalyst support]

As described in non-patent document 1, at least part of each of the hydrocarbon ionomer, the catalyst, and the catalyst support forms particles in which at least part of the surface of a composite composed of a catalyst support having a catalyst supported thereon is covered with a hydrocarbon ionomer. That is, it is preferred that the catalyst composition contains particles comprising the above-mentioned hydrocarbon ionomer comprising a polymer compound having a structure represented by the general formula (I) above, the above-mentioned catalyst, and the above-mentioned catalyst support.

The particles, which comprise the hydrocarbon ionomer comprising a polymer compound having a structure represented by the general formula (I), the catalyst, and the catalyst support, preferably have a median diameter (d50) of 0.1 to 10.0 µm, more preferably 0.1 to 5.0 µm, further preferably 0.1 to 1.0 µm, in the volume-based particle size distribution measured by a laser diffraction scattering method. When the median diameter of the particles is in the above range, the dispersibility of the particles is improved, and further the effective utilization rate of the catalyst is improved.

The reason why the dispersibility of the particles is improved resides, for example, in that, according to the Stokes' law, the sedimentation velocity of particles is proportional to the square of the particle diameter, and hence particles having a particle diameter in the above range are reduced in the sedimentation velocity of the particles. Therefore, the hydrocarbon ionomer has a major property that it functions as an electrolyte, but is considered to function also as a dispersant.

It is considered that when the median diameter of the particles is in the above range, aggregation of a composite of the catalyst and catalyst support is suppressed. With respect to the composite of the catalyst and catalyst support, in the catalyst composition, generally, a plurality of the composites suffer aggregation, and further the composites form a secondary aggregate. By using the hydrocarbon ionomer comprising a polymer compound having a structure represented by the general formula (I), the catalyst composition is expected to have a form in which the hydrocarbon ionomer inhibits secondary aggregation of the composites to cover the primary aggregate of the composites, or a form in which the hydrocarbon ionomer covers an aggregate of the smaller number of composites than usual. The suppression of aggregation of the composites as mentioned above increases the surface area of the catalyst in contact with the hydrocarbon ionomer, improving the effective utilization rate of the catalyst. As a result, the amount of the catalyst used is effectively reduced.

### [Optional component]

The hydrocarbon ionomer may contain a hydrocarbon ionomer other than the polymer compound having a structure represented by the general formula (I). As an example of the hydrocarbon ionomer other than the polymer compound having a structure represented by the general formula (I), there can be mentioned a polymer compound having an aromatic structure in the principal chain thereof. From the viewpoint of reducing the particle diameter of the particles, it is preferred that the hydrocarbon ionomer comprises only the polymer compound having a structure represented by the general formula (I).

The catalyst composition may contain an electrolyte other than the hydrocarbon ionomer. The hydrocarbon ionomer may be used in combination with an electrolyte other than the hydrocarbon ionomer, for example, at least one member selected from the group consisting of a fluorine sulfonic acid polymer, such as Nafion (registered trademark; manufactured by DuPont Inc.), Aquivion (registered trademark; manufactured by Solvay S.A.), Flemion (registered trademark; manufactured by AGC Inc.), or Aciplex (registered trademark; manufactured by Asahi Kasei Corporation), a hydrocarbon sulfonic acid polymer, and a partially fluorine introduced-type hydrocarbon sulfonic acid polymer. From the viewpoint of reducing the particle diameter of the particles, it is preferred that the catalyst composition does not contain an electrolyte other than the hydrocarbon ionomer.

The catalyst composition may contain a binder and a solvent.

For suppressing lowering of the electronic conductive properties in the electrocatalyst, a binder can be used as a component for binding the catalyst support together. Examples of binders include polytetrafluoroethylene (PTFE), polyvinylidene fluoride (PVDF), an ethylene-propylene-diene copolymer (EPDM), and fluorine sulfonic acid polymers, such as Nafion (registered trademark; manufactured by DuPont Inc.), Aquivion (registered trademark; manufactured by Solvay S.A.), Flemion (registered trademark; manufactured by AGC Inc.), and Aciplex (registered trademark; manufactured by Asahi Kasei Corporation). These polymers may be used individually or in combination. From the viewpoint of reducing the particle diameter of the particles, it is preferred that the catalyst composition does not contain a binder.

Examples of solvents include polar solvents, such as water, methanol, ethanol, 1-propanol, 2-propanol, 1-butanol, 2-butanol, isobutyl alcohol, tert-butyl alcohol, pentanol, dimethyl sulfoxide, and N,N-dimethylformamide. With respect to the solvent, water, methanol, ethanol, 1-propanol, 2-propanol, 1-butanol, 2-butanol, and isobutyl alcohol are preferred. These solvents may be used individually or in combination.

The amounts of the individual components contained in the catalyst composition are appropriately controlled according to the purpose, but, in the 100% by mass of the solids of the catalyst composition determined by removing the weight of the solvent from the composition, the amount of the catalyst is preferably 10 to 60% by mass, more preferably 30 to 50% by mass, the amount of the electrolyte comprising the polymer compound having a structure represented by the general formula (I) above is preferably 5 to 50% by mass, more preferably 10 to 30% by mass, the amount of the catalyst support is preferably 20 to 75% by mass, more preferably 30 to 50% by mass, and the amount of the binder is preferably 0 to 5% by mass, more preferably 0 to 3% by mass. With respect to the component that is mentioned as both an electrolyte and a binder, the amount of such a component is included in the above-mentioned amount of the electrolyte.

With respect to the solvent used in the catalyst composition, the amount of the solvent is preferably 50 to 99% by mass, more preferably 80 to 99% by mass, in the 100% by mass of the catalyst composition.

The catalyst composition can be prepared by adding the catalyst, the catalyst support, or the catalyst supported on the catalyst support, the hydrocarbon ionomer, and the optional component to the solvent, and dispersing the resultant mixture using a dispersing machine or a mixing machine, such as a homogenizer. Generally, the preparation of the catalyst composition is conducted at room temperature under atmospheric pressure, but the temperature and pressure may be appropriately controlled.

### [Polymer electrolyte fuel cell]

The catalyst composition is advantageously used in a catalyst layer for a polymer electrolyte fuel cell.

Fig. 1 is a cross-sectional view diagrammatically showing the construction of a polymer electrolyte fuel cell (hereinafter, frequently referred to as "fuel cell").

Polymer electrolyte fuel cell 100 has anode catalyst layer 103, cathode catalyst layer 105, and solid electrolyte membrane 107 disposed between the catalyst layers, and each catalyst layer has gas diffusion layer (hereinafter, frequently referred to as "GDL") 101 as an outside layer. This construction is called a membrane electrode assembly (hereinafter, frequently referred to as "MEA"). A polymer electrolyte fuel cell generally has the membrane electrode assembly (MEA) disposed between separators 109.

The catalyst supported on a catalyst support is referred to as electrocatalyst. In the present specification, anode catalyst layer 103 and/or cathode catalyst layer 105 is frequently referred to simply as "catalyst layer".

At least one of anode catalyst layer 103 and cathode catalyst layer 105 of the fuel cell contains the above-mentioned catalyst composition comprising the hydrocarbon ionomer, catalyst, and catalyst support, and, from the viewpoint of the suppression of overvoltage increase caused due to deterioration of oxygen gas diffusion properties during the high current driving, it is preferred that at least cathode catalyst layer 105 contains the catalyst composition comprising the hydrocarbon ionomer, catalyst, and catalyst support.

A method for forming anode catalyst layer 103 and cathode catalyst layer 105 is described. The above-mentioned catalyst composition comprising the hydrocarbon ionomer, catalyst, and catalyst support is prepared as a catalyst ink, and then the catalyst ink is applied onto an intended substrate and dried to form a catalyst layer.

As examples of the intended substrate, there can be mentioned a polymer electrolyte membrane, a GDL, and a sheet formed from a fluororesin, and a catalyst layer can be formed by a known method. When the catalyst ink is applied to a sheet formed from a fluororesin, the applied catalyst layer is transferred to a polymer electrolyte membrane. Examples of fluororesins include polytetrafluoroethylene (PTFE), PFA (perfluoroalkoxyalkane), EFTE (ethylene-tetrafluoroethylene copolymer), FEP (perfluoroethylene-propene copolymer), PVDF (polyvinylidene fluoride), PCTFE (polychlorotrifluoroethylene), and ECTFE (ethylene-chlorotrifluoroethylene copolymer), and polytetrafluoroethylene (PTFE) is preferred. The fluororesin means a resin containing a fluorine atom.

As examples of the material for solid electrolyte membrane 107, there can be mentioned the polymer compound having a structure represented by the general formula (I) above, fluorine sulfonic acid polymers, such as Nafion (registered trademark; manufactured by DuPont Inc.), Aquivion (registered trademark; manufactured by Solvay S.A.), Flemion (registered trademark; manufactured by AGC Inc.), and Aciplex (registered trademark; manufactured by Asahi Kasei Corporation), hydrocarbon sulfonic acid polymers, and partially fluorine introduced-type hydrocarbon sulfonic acid polymers, and, from the viewpoint of the proton conductive properties, there can be mentioned the compound represented by the general formula (I) above.

From the viewpoint of the electrical conductivity, durability, and gas cross leak, solid electrolyte membrane 107 preferably has a thickness of 10 to 100 µm, more preferably 20 to 60 µm.

With respect to gas diffusion layer 101, there is no particular limitation, but a porous material having electrical conductivity is preferably used, and examples of such materials include paper and nonwoven fabric each made of carbon, felt, and nonwoven fabric.

### Examples

Hereinbelow, the present invention will be described in more detail with reference to the following Examples and Comparative Examples, which should not be construed as limiting the scope of the present invention.

The values shown in the Examples were measured or determined by the methods described below.

### [Measurement method for particle diameter (median diameter)]

A volume-based particle size distribution was measured using the apparatus shown below, and a median diameter d50, which corresponds to a cumulative frequency 50% by volume from the smaller particle diameter side, was determined.
Name of apparatus used: LA960
Manufacturer: Horiba, Ltd.
Measurement method: Laser diffraction scattering method
Set values of refractive index:
   Sample: Carbon
      Real number term (LD): 1.92
      Imaginary number term (LD): 0.522
      Real number term (LED): 1.92
      Imaginary number term (LED): 0.522
   Dispersing medium: Water
      Real number term (LD): 1.333
      Real number term (LED): 1.333

### [Measurement method for a number average molecular weight (Mn) and a weight average molecular weight (Mw)]

The measured values are the results of measurement made by gel permeation chromatography (hereinafter, referred to simply as "GPC"). In the measurement, a GPC apparatus, manufactured by Tosoh Corp., was used, and conditions for the measurement and others are as follows.
GPC Column: TSKgel SuperHZM-N; TSKgel, SuperHZM-M; TSKgel, SuperHZ-L; TSKgel guard column (Tosoh Corp.)
Column temperature: 40°C
Solvent: Tetrahydrofuran (THF)
Flow rate: 0.3 ml/min
Standard sample: Polystyrene (Tosoh Corp.)

### [Synthesis Example 1: Synthesis of electrolyte 1 which is a hydrocarbon ionomer]

### (1) Synthesis of P-1

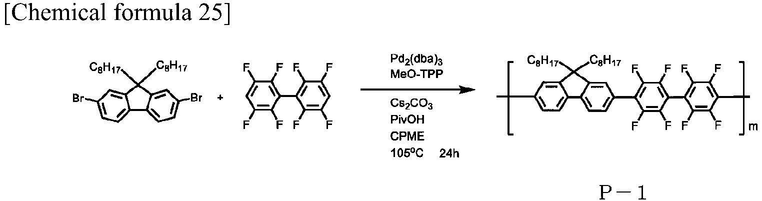

In a reaction vessel in a nitrogen gas atmosphere were placed 24.0 g of 2,7-dibromo-9,9-di-n-octylfluorene (manufactured by BLDpharm), 13.7 g of 4H,4'H-octafluorobiphenyl (manufactured by Manchester Organics Ltd.), 0.422 g of tris(dibenzylideneacetone)dipalladium(0) (manufactured by Tokyo Chemical Industry Co., Ltd.), 0.650 g of tris(o-methoxyphenyl)phosphine (manufactured by Tokyo Chemical Industry Co., Ltd.), 45.0 g of cesium carbonate (manufactured by Kanto Chemical Co., Inc.), and 330 mL of cyclopentylmethyl ether (Kanto Chemical Co., Inc.), and a solution obtained by dissolving 4.70 g of pivalic acid (manufactured by Tokyo Chemical Industry Co., Ltd.) in 6 mL of cyclopentylmethyl ether (manufactured by Kanto Chemical Co., Inc.) was added. The reaction mixture was heated to 105°C and stirred for 24 hours. After cooling to room temperature, the resultant reaction mixture was dropwise added to a methanol-ion-exchanged water-35% HCl mixture, followed by stirring. Filtration under a reduced pressure was conducted, and the resultant filtration residue was dried and then dissolved in tetrahydrofuran, and the resultant solution was dropwise added to a solution obtained by dissolving sodium N,N-diethyldithiocarbamate trihydrate (Kanto Chemical Co., Inc.) in methanol so as to have a concentration of 0.38%, followed by stirring. Filtration under a reduced pressure was conducted and the resultant filtration residue was dried. Further, the filtration residue was dissolved in tetrahydrofuran, and the resultant solution was dropwise added to a solution obtained by dissolving sodium N,N-diethyldithiocarbamate trihydrate (Kanto Chemical Co., Inc.) in methanol so as to have a concentration of 0.45%, followed by stirring. Filtration under a reduced pressure was conducted and the resultant filtration residue was dried, obtaining 28.1 g of P-1 (yield: 89%).
Mn: 26,300 (PDI 3.00)

### (2) Synthesis of P-1-1

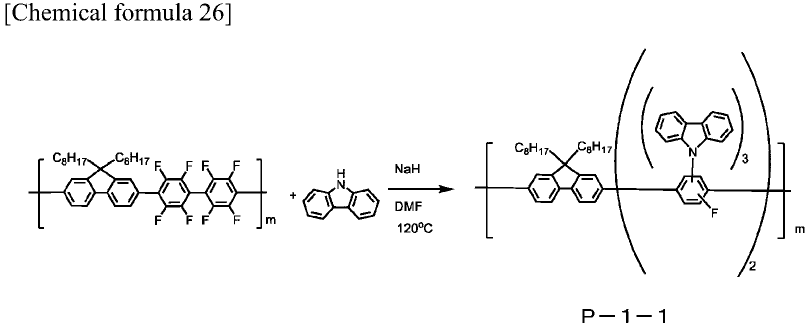

15.0 g of P-1 and 600 ml of N,N-dimethylformamide (DMF) (manufactured by Junsei Chemical Co., Ltd.) were placed in a reaction vessel, and 25.6 g of carbazole (manufactured by Tokyo Chemical Industry Co., Ltd.) and 6.69 g of sodium hydride (Kanto Chemical Co., Inc.) were added. The reaction mixture was heated to 120°C and stirred for 24 hours. The resultant reaction mixture was dropwise added to ion-exchanged water, followed by stirring. Filtration under a reduced pressure was conducted, and the cake was washed with methanol, and then the resultant filtration residue was dried, and then dissolved in chloroform and the resultant solution was dropwise added to methanol, followed by stirring. Filtration under a reduced pressure was conducted, and the resultant filtration residue was dried. Further, the filtration residue was dissolved in chloroform, and the resultant solution was dropwise added to methanol, followed by stirring. Filtration under a reduced pressure was conducted and the resultant filtration residue was dried, obtaining 22.7 g of P-1-1 (yield: 66%).

### (3) Synthesis of electrolyte 1

18.0 g of P-1-1 and 540 mL of methylene chloride (manufactured by Kanto Chemical Co., Inc.) were placed in a reaction vessel, and 10.9 g of trimethylsilyl chlorosulfonate (manufactured by Sigma-Aldrich Co., LLC.) was added. The reaction mixture was stirred at room temperature for 24 hours, and then ethanol was added to the mixture to terminate the reaction. The resultant reaction mixture was dropwise added to tert-butylmethyl ether, followed by stirring. Then, filtration under a reduced pressure was conducted and the resultant filtration residue was dried, obtaining 20.7 g of electrolyte 1 which is a hydrocarbon ionomer having a sulfonic acid group introduced into P-1-1.

### [Example 1]

### (1) Preparation of a catalyst ink

A platinum-supported carbon catalyst (TEC10E50E, manufactured by Tanaka Kikinzoku Kogyo K.K.), ion-exchanged water, 1-propanol, and a 5% ion-exchanged water/1-propanol (1 part by mass/1 part by mass) solution of electrolyte 1 were placed in a glass vessel so that I/C = 1.0, the solids concentration became 3%, and ion-exchanged water/1-propanol = 1 part by mass/1 part by mass, and irradiated with ultrasonic waves by means of a homogenizer for 20 minutes, preparing a catalyst ink.

### [Examples 2 to 5]

Catalyst inks were individually obtained in substantially the same manner as in Example 1 except that the I/C was changed to those shown Table 1.

### [Comparative Example 1]

A platinum-supported carbon catalyst (TEC10E50E, manufactured by Tanaka Kikinzoku Kogyo K.K.), ion-exchanged water, 1-propanol, and a 5% Nafion dispersion (DE520 CS type, manufactured by Wako Pure Chemical Industries, Ltd.) were placed in a glass vessel so that I/C = 1.0, the solids concentration became 3%, and ion-exchanged water/1-propanol = 1 part by mass/1 part by mass, and irradiated with ultrasonic waves by means of a homogenizer for 20 minutes, preparing a catalyst ink.

### [Comparative Example 2]

A catalyst ink was obtained in substantially the same manner as in Comparative Example 1 except that the I/C was changed to 0.5.

### [Comparative Examples 3 and 4]

Catalyst inks were individually obtained in substantially the same manner as in Example 1 except that the I/C was changed to those shown in Table 1.

The median diameters of the particles in the catalyst inks in the Examples and Comparative Examples are shown in Table 1. The particles contain the hydrocarbon ionomer, the catalyst, and the catalyst support.

I/C is the mass ratio of the hydrocarbon ionomer to the carbon in the catalyst support.

**[Table 1]**

| | Ionomer | I/C | Median diameter /µm |
|---|---|---|---|
| Example 1 | Electrolyte 1 | 1.00 | 0.28 |
| Example 2 | Electrolyte 1 | 0.50 | 0.45 |
| Example 3 | Electrolyte 1 | 0.30 | 0.36 |
| Example 4 | Electrolyte 1 | 0.20 | 5.06 |
| Example 5 | Electrolyte 1 | 0.10 | 9.85 |
| Comparative Example 1 | Nation | 1.00 | 12.69 |
| Comparative Example 2 | Nation | 0.50 | 14.29 |
| Comparative Example 3 | Electrolyte 1 | 0.05 | 14.68 |
| Comparative Example 4 | Electrolyte 1 | 0.013 | 17.17 |

From Examples 1 to 5, it is found that when an ionomer comprising the polymer compound represented by the general formula (I) is used in the catalyst composition and the I/C is in the specific range, the particles comprising the ionomer, the catalyst, and the catalyst support have a reduced particle diameter. In contrast, from Comparative Examples 1 and 2, it is found that when Nafion is used as the ionomer, the particles comprising the ionomer, the catalyst, and the catalyst support have an increased particle diameter. As apparent from the above, in the catalyst composition of the present invention, the particles comprising the ionomer, the catalyst, and the catalyst support have a small particle diameter and thus are unlikely to suffer sedimentation, and an operation of redispersion treatment before using the composition is not needed, and therefore it is expected that when producing a catalyst layer for a polymer electrolyte fuel cell from the catalyst composition, the productivity is improved. From Comparative Examples 3 and 4, it is found that when the I/C is not in the specific range, the particles comprising the ionomer, the catalyst, and the catalyst support have an increased particle diameter.

### INDUSTRIAL APPLICABILITY

The catalyst composition of the present invention can be advantageously used in a catalyst layer for a polymer electrolyte fuel cell.

### Description of Reference Numerals

100: Polymer electrolyte fuel cell
101: Gas diffusion layer
103: Anode catalyst layer
105: Cathode catalyst layer
107: Solid electrolyte membrane
109: Separator

## Claims

1. A catalyst composition comprising a hydrocarbon ionomer, a catalyst, and a catalyst support,
the hydrocarbon ionomer comprising a polymer compound having a structure represented by the following general formula (I),
wherein the mass ratio of the hydrocarbon ionomer to the carbon in the catalyst support is 0.10 to 1.20: 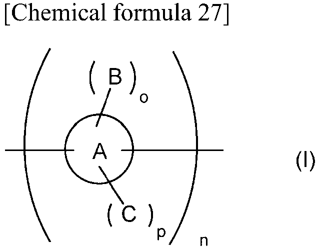
wherein, in general formula (I), n is 1 to 2, o is 1 to 3, and p is 0 to 3, wherein the relationship: o + p ≤ 4 is satisfied,
ring A is a benzene ring or a naphthalene ring, and
each of B and C is independently a group having at least one member selected from the group consisting of an alkyl group, an alkyl group having an ether linkage, a cycloalkyl group, and an aromatic group,
which is bonded to ring A through a single heteroatom, or a heterocycle having a heteroatom therein bonded to ring A, and the ring and the group of B and C optionally have a substituent,
wherein B and C are the same or different, at least one of B and C has an aromatic ring, and at least one aromatic ring of B and C has at least one sulfonic acid group, and
wherein carbons of ring A, except the carbons bonded to the principal chain and the carbons to which B and C are bonded, are optionally substituted by a halogen atom.

2. The catalyst composition according to claim 1, which contains particles comprising the hydrocarbon ionomer, the catalyst, and the catalyst support,
wherein the particles have a median diameter of 0.1 to 10.0 µm in the volume-based particle size distribution measured by a laser diffraction scattering method.

3. The catalyst composition according to claim 1 or 2, wherein the polymer compound having a structure represented by the general formula (I) above is a compound represented by the general formula (II): 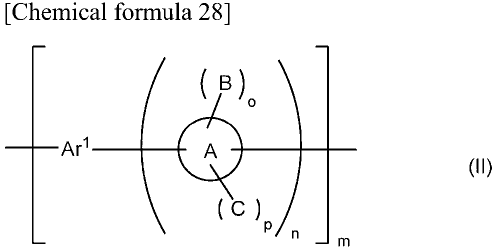
wherein, in general formula (II), Ar¹ is an aromatic group having 6 to 40 carbon atoms and optionally having a substituent, m is 3 or more, and
ring A, B, C, n, o, and p are as defined for the general formula (I).

4. The catalyst composition according to claim 3, wherein, in the general formula (II), Ar¹ is a structure represented by the following general formula (III): 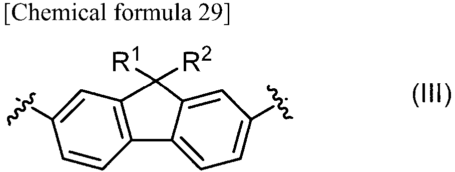 wherein, in general formula (III), each of R¹ and R² is independently an alkyl group, a cycloalkyl group, or an aromatic group, each optionally having a substituent, and R¹ and R² optionally together form a ring.

5. The catalyst composition according to claim 1 or 2, wherein, in the general formula (I), each of the structures represented by B and C is independently a structure represented by the following general formula (IV) or (V), wherein the ring and the group contained in the general formula (IV) or (V) optionally have a substituent, and wherein at least one aromatic ring of the general formula (IV) or (V) has at least one sulfonic acid group: 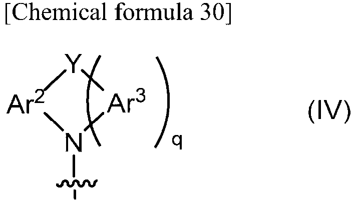
wherein, in general formula (IV), each of Ar² and Ar³ is independently a benzene ring or a naphthalene ring, each optionally having a substituent,
Y is a single bond, -CH₂-, or carbonyl, and q is 0 or 1, wherein when q is 0, one end of Y and one end of N are linked to each other, 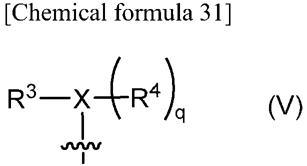
wherein, in general formula (V), q is 0 or 1, X is a heteroatom, and each of R³ and R⁴ is independently an alkyl group, an alkyl group having an ether linkage, a cycloalkyl group, a phenyl group, or a naphthyl group,
each optionally having a substituent, and R³ and R⁴ optionally together
form a ring containing X.

6. The catalyst composition according to claim 1 or 2, which is for use in a polymer electrolyte fuel cell.

7. A catalyst layer for a polymer electrolyte fuel cell, comprising the catalyst composition according to claim 1 or 2.

8. A membrane electrode assembly having a solid electrolyte membrane, a gas diffusion layer, and the catalyst layer according to claim 7.

9. A polymer electrolyte fuel cell having the membrane electrode assembly according to claim 8.
